# EUROPEAN PATENT SPECIFICATION

(11) **EP 0 667 475 B1**
(45) Date of publication and mention of the grant of the patent: **28.04.1999**
(21) Application number: 95101498.4
(22) Date of filing: 03.02.1995
(51) Int. Cl.: F16L 3/14, F16L 3/133

(54) **Supporting collar for pipes**
Rohraufhängevorrichtung
Dispositif de suspension pour tuyaux

(30) Priority: 07.02.1994 IT VR940007
(43) Date of publication of application: 16.08.1995
(73) Proprietor: Zenhäusern, Heinrich Stephan, CH-8902 Urdorf Z.H. (CH)
(72) Inventor: Scotti, Emilio, I-37121 Verona (IT)
(74) Representative: Rottmann, Maximilian R.

(56) References cited:
- EP-A- 0 165 370
- DE-U- 9 217 960
- FR-A- 2 439 928
- US-A- 1 582 358
- US-A- 2 466 247

## Description

The present invention relates to a supporting collar particularly for pipes in general and pipes made of synthetic material in particular.

It is known that a supporting collar must ensure a stable and durable action on the pipe, so as to prevent mutual movements between the pipe and the collar. The collars that have been proposed so far have a compact shape and are in general constituted by a pair of metal half-collars that can be secured by means of bolts and can be rigidly coupled to a support, or are collars which have no bolts but are shaped according to the dimensions and shape of the pipe.

These collars, despite being an effective bracket fitting means, are not fully free from drawbacks and limitations of a practical kind. Inserting the fixing bolts in the female threads of the collar or locking an appropriate clamp are in fact extremely difficult operations in tight spaces, especially if the working position is awkward, and at the same time mounting the collar requires physical effort.

Furthermore, the collars proposed so far, despite being adaptable to pipes which have the same shape, are not universal and accordingly cannot be mounted in composite solutions according to the size of the pipes.

Another drawback of conventional collars is due to their bulk during storage, since they are three-dimensional and occupy a relatively large space.

FR-A-2 439 928 discloses a pipe supporting collar which includes a combination of features as set forth in the precharacterizing portion of the appended claim 1. In particular, the collar is provided with a plurality of engagement holes or notches extending along its entire length, two of which are selectively engaged in a pair of opposite openings of a fixing bracket after the collar has been wrapped about a pipe.

A principal aim of the present invention is to provide a supporting collar for pipes which eliminates or drastically reduces the drawbacks described above with reference to conventional collars.

An object of the present invention is to provide a supporting collar for pipes which is capable of ensuring effective and stable coupling on the pipes, can be applied on site in a very short time and without having to perform complicated maneuvers, and is suitable to be stored or packaged in very small spaces.

A further object of the present invention is to provide a collar that can be applied to any type of pipe and can be produced at competitive costs.

In accordance with the invention, there is provided a supporting collar for pipes which comprises: at least one strip made of flexible material for wrapping around a pipe to be supported, said strip being provided with engagement means at its ends; and a U-shaped support which is provided, on opposite sides, with anchoring means, each of which is suitable to detachably couple to a respective end engagement means of the strip. The supporting collar according to the invention is characterized in that the end engagement means of the strip comprise a cantilevered tooth within a through opening proximate to each end of the strip, and at one end of a strip the tooth can engage the opening of another strip, by placing the two strips adjacent and making them slide with respect to each other so that the two strips can be joined. In such a manner, the number of strip modules may be advantageously minimized for the various pipe diameters to be supported.

Advantageously, during use, at least one removable tensioning insert is provided between the U-shaped support and the pipe.

Further characteristics and advantages of the invention will become apparent from the following detailed description of some currently preferred embodiments thereof, given only by way of non-limitative example with reference to the accompanying drawings, wherein:
figure 1 is a transverse sectional view of a pipe with a supporting collar according to the invention;
figure 2 is a top view of figure 1;
figure 3 is a plan view, or flattened view, of a flexible strip provided with two pairs of end engagement notches;
figure 4 is a sectional view, taken along the plane IV-IV of figure 3;
figure 5 is a perspective view of a U-shaped support or bracket;
figure 6 is a view of two strips such as the one of figures 3 and 4 joined together, one after the other, by using their pairs of end notches;
figure 7 is a side view of the strips of figure 6;
figure 8 is a view, similar to figure 1, but with two strips joined as in figures 6 and 7;
figure 9 is a perspective view of a further embodiment of the U-shaped support;
figure 10 is a view, similar to figure 1, but using the support of figure 9;
figure 11 is a top view of figure 10;
figure 12 is a plan view of a tensioning insert that can be removably inserted between the U-shaped element and the pipe;
figure 13 is a side view of the U-shaped element of figure 12;
figure 14 is a plan view of the insert of figure 12;
figure 15 is a partial view, similar to figure 1, but using an insert according to figures 12 to 14;
figure 16 is a view of a different embodiment of the insert which can be inserted between one arm of the U-shaped element and the pipe;
figure 17 is a perspective view of a further different embodiment of the insert; and
figure 18 is a sectional view, similar to figure 15, but of another embodiment.

Identical or similar parts or components have been designated by the same reference numerals in the accompanying drawings.

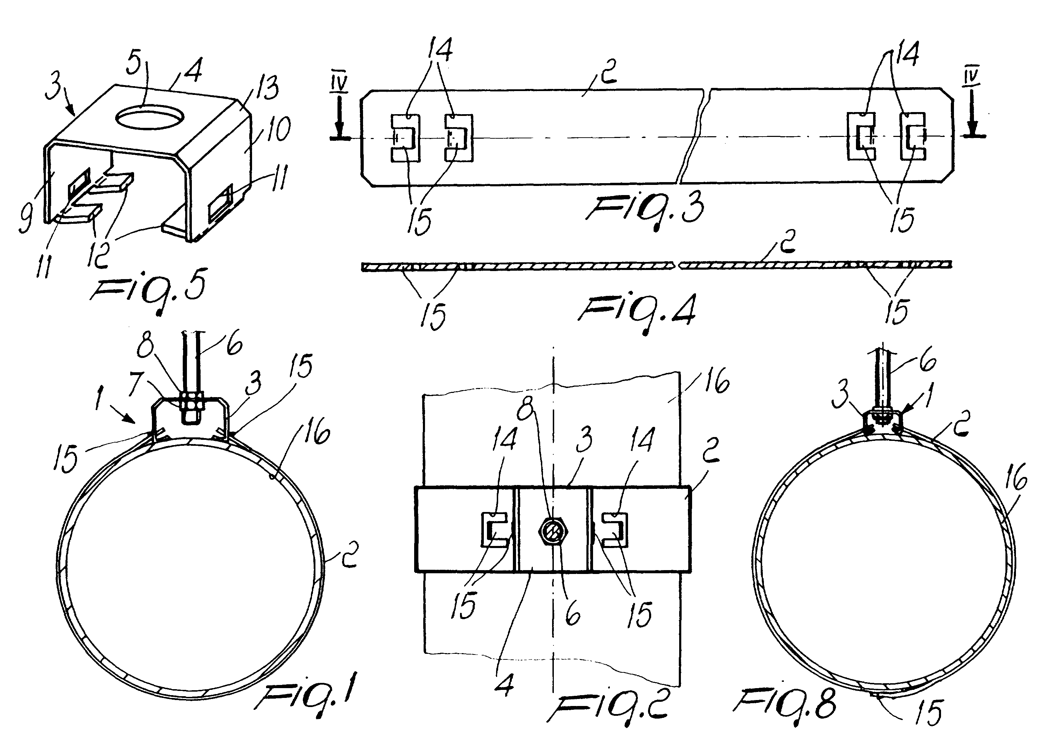

Initially with reference to the embodiment of figures 1 to 5, it is evident that a collar 1 according to the present invention comprises a flexible strip 2 made of a material having good tensile strength and good elasticity, such as for example various types of steel, stainless steel, copper, and many types of plastics. The strip can optionally be treated with antioxidant protective agents on its surface, for example if it is constituted by carbon steel.

The collar 1 furthermore comprises a U-shaped support or bracket 3 which is shaped like an inverted U and comprises an intermediate rigid portion 4 which is provided with a central hole 5 for fixing to a threaded rod 6 by virtue of any suitable means, for example by means of a nut 7 and a lock nut 8. The rod 6 can in turn be fixed both to the ceiling and to a vertical wall and can typically be part of a screw anchor.

The bracket 3 has two oppositely arranged lateral arms or sides 9 and 10 which lie substantially at right angles to the intermediate portion 4; each arm has a through opening 11 and ends with a flap or with a pair of flaps 12 which are arranged laterally with respect to the respective opening 11 and are directed towards the inside of the bracket 3, preferably with a slight inward inclination with respect to the rigid intermediate portion 4.

The bracket 3 can have a chamfer 13 between the sides 9 and 10 and the intermediate portion 4. The central hole 5 can optionally be threaded, or it is possible to fix, for example weld or glue, coaxially to said hole, a female thread in which the bar 6 can screw.

Proximate to each one of its ends, the strip 2 has engagement means which are constituted by two through openings or internal notches 14 which have for example a quadrangular contour; a tooth 15 protrudes in a cantilevered manner like a hook into each opening and is normally co-planar with respect to the strip. It is evident that the teeth 15 at one end of the strip 2 are directed towards the teeth 15 on the other end of said strip.

The distance between the flaps 12 and their size are in fact such that said flaps can easily enter a notch 14, so as to allow the respective tooth 15 to slide between them; accordingly, by inserting one end of the strip 2 beneath the flaps 12 the corresponding notch can be inserted over a pair of flaps 12 and can be made to slide on them until the tooth 15 enters the adjacent opening 11 in the side of the bracket, so as to actually mutually engage the strip and the bracket. By proceeding in a similar manner with the other end of the strip 2, after wrapping it around a pipe 16 to be supported, it is possible to rapidly complete mounting without using tools.

As shown in figure 2, the overall width of the bracket 3 is substantially equal to the width of the strip 2.

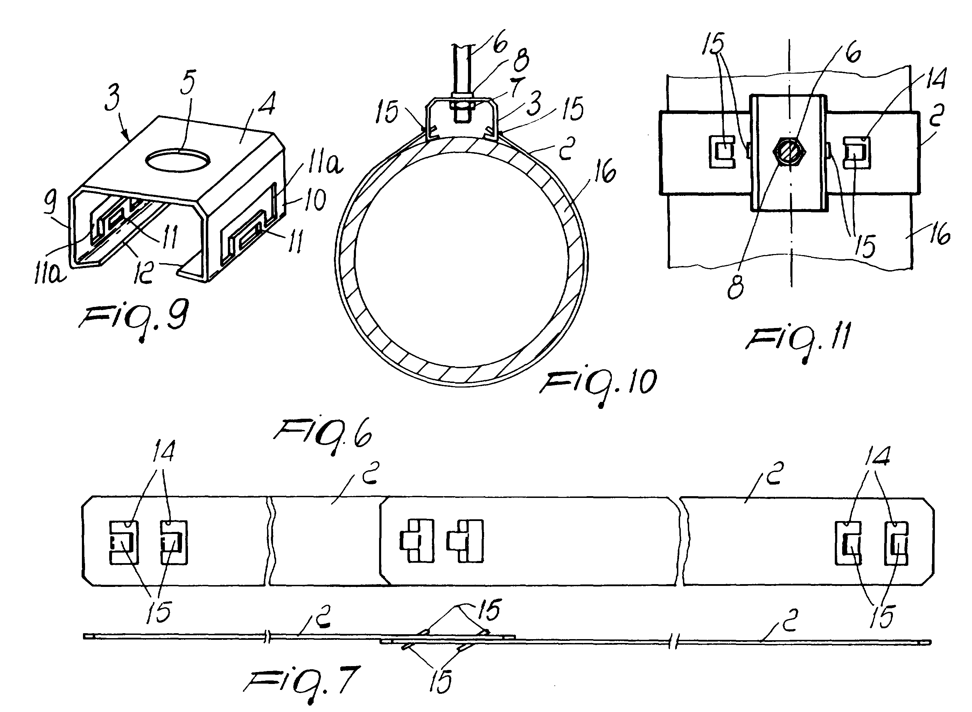

Figures 6 to 8 show that two strips 2 can be joined together without using any auxiliary means but simply by lifting their teeth 15 (two teeth in one strip and two in the other strip) at their adjacent ends to be joined and by then arranging them mutually adjacent and sliding them with respect to each other, pulling one strip away from the other so as to engage the teeth 15 in a respective opening or notch 14. This characteristic is very important, since it allows to minimize the number of strip modules for the various pipe diameters to be supported.

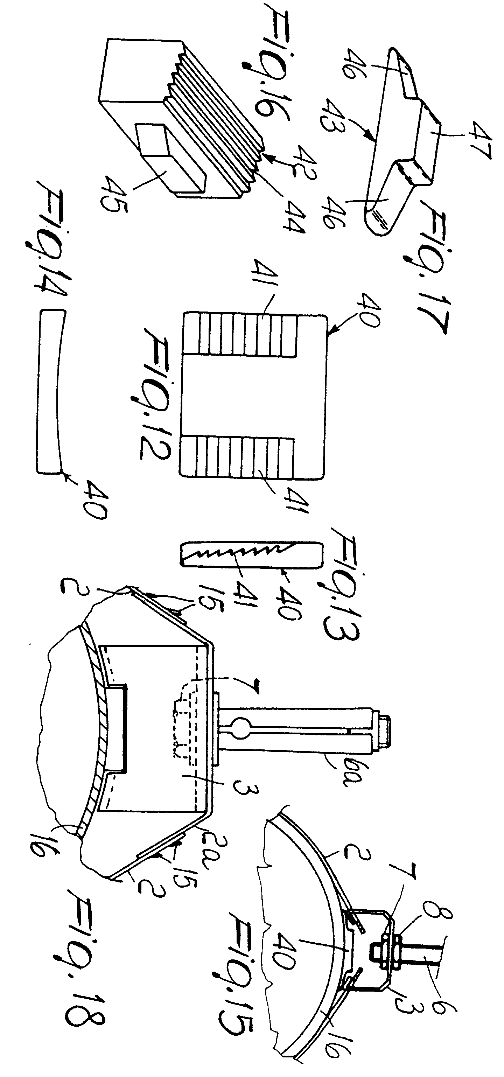

The embodiment illustrated in figures 9 to 11 has an anchoring bracket 3 in which the sides 9 and 10 have two openings 11 and 11a, one inside the other; the dimensions are such that the internal opening 11 loosely accommodates a tooth 15 of the strip 2, whereas the gap between the outer wall of the opening 11 and the inner wall of the opening 11a is provided so that it accommodates said strip at one of its notches 14.

For installation one proceeds as described above, or first of all the bracket 3 is fixed to the supporting bar 6 or directly to an installation point, for example by means of an expansion plug, and then the flexible strip 2 is placed around the pipe 16 to be supported with a bracket and the ends of the strip are inserted in a corresponding opening 11a, so that the respective tooth 15 engages the opening 11. Once the strip 2 has entered a side 9 or 10 so that a tooth 15 has entered the opening 11, it remains firmly anchored to the engagement bracket 3 at both of its ends.

In this embodiment, the bracket 3 is necessarily wider than the strip 2, since said strip must be partially accommodated in the bracket.

In any case, mounting of the collar is very fast. After fixing the bracket 3 to an external support (not shown in the figures) by means of the bar 6 or by virtue of other systems mentioned above, the strip 2 can be wrapped around the pipe 16 very easily and can be coupled to said bracket with very simple movements.

In some cases, especially if it is necessary to support a pipe along a vertical wall, in order to ensure greater tensioning of the strip 2 it is possible to use an insert between the pipe and the flaps 12 and optionally between the strip and the pipe. Figures 12 to 14 illustrate an insert 40 with two inclined and toothed lateral portions 41 which are meant to fit in a wedge-like manner below the flaps 12 once the strip has been anchored to the bracket, as shown in figure 15. This ensures high tensioning of the strip which, due to assembly requirements, has a slight play with respect to the pipe, and ensures permanent stabilization of the engagement between the collar and the pipe.

Figure 16 illustrates an insert 42 which is meant to fit beneath a respective pair of flaps 12. The insert 42 also has a face 44 which is provided with grooves or otherwise rough so as to ensure good grip with the flaps 12, and has a front protrusion 45 which is meant to abut against an edge of an opening 14 of the strip 2, the very opening which is engaged with the bracket. The insert 42 is meant to be inserted from the inside of the bracket towards and beneath the flaps 12.

The insert 43 of figure 17 has two inclined lateral portions 46 to allow good penetration between the strip 2 and the pipe; said portions are separated by an intermediate raised portion 47 which is meant to fit in an opening 14 of the strip and keep it locked in position.

The use of the blocks 40, 42, and 43 can be recommended on collars for pipes which are arranged vertically or horizontally and are expected to be subjected to vibration, shaking, etcetera, in order to avoid any unwanted mutual motion between the pipe and the collar.

Figure 18 is a schematic view of an example in which the means for anchoring the bracket 3 are constituted by a strip 2a which is fully similar to a strip 2 of figure 3, 6, and 7 but is provided with an intermediate hole to be inserted either on the supporting bar 6 or on another suitable supporting means, such as a screw anchor 6a, to keep the bracket 3 pressed against the pipe after installation. The strip 2a can engage, in the manner described with reference to figures 6 and 7, a strip 2 or two or more mutually joined strips 2 for engaging a pipe 16. In this embodiment, the bracket 3 may not have the flaps 12.

In accordance with a further aspect of the invention, during manufacture the teeth 15 of the strips 2 might be provided so that they protrude outside the plane of arrangement of the respective strip.

The strips may also be provided with gaskets or with insulating or condensation-proofing material.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Supporting collar for pipes which comprises:
at least one strip (2) made of flexible material for wrapping around a pipe to be supported, said strip being provided with engagement means at its ends; and
a U-shaped support (3) which is provided, on opposite sides, with anchoring means, each of which is suitable to detachably couple to a respective end engagement means of the strip;
the supporting collar being characterized in that said end engagement means of the strip comprise a cantilevered tooth (15) within a through opening (14) proximate to each end of the strip, and at one end of a strip (2) the tooth (15) can engage the opening (14) of another strip (2), by placing the two strips adjacent and making them slide with respect to each other so that the two strips can be joined.

2. Collar according to claim 1, characterized in that said engagement means comprise at least one, or a pair of, said through openings (14) proximate to each end of the strip (2), and a said cantilevered tooth (15) within each opening (14).

3. Collar according to claim 2, characterized in that the or each tooth (15) at one end of the strip (2) is directed towards the or each tooth at the other end of the strip.

4. Collar according to any one or more of the preceding claims, characterized in that said U-shaped support (3) comprises a bracket which is shaped like an inverted U and has arms (9, 10), each of which is provided with at least one end opening (11, 11a) and with an end flap or flaps (12) which are directed towards the inside of the support to detachably engage the ends of a strip (2).

5. Collar according to any one or more of the preceding claims, characterized in that said U-shaped support has a hole (5) for coupling to an anchoring means.

6. Collar according to claim 1, characterized in that said engagement means comprise a strip (2a) which is made of flexible material, can be joined to the ends of one or more wrapping strips, and is adapted to keep said U-shaped support (3) pushed against the pipe after installation.

7. Collar according to any one of the preceding claims, characterized in that it comprises a detachable insert (40, 42, 43) between the U-shaped support (3) and the pipe (2).

8. Collar according to claim 7, characterized in that said insert comprises a body (40,43) which is provided with two lateral portions shaped like an inclined plane (41,46) for sliding engagement with the end flaps (12) of the U-shaped support (3).

9. Collar according to claim 8, characterized in that said inclined-plane portions (41) are provided with teeth or otherwise rough.

10. Collar according to claim 7, characterized in that said insert (42) has a raised portion or a protrusion (45,47) for engaging an opening or notch (14, 30) of the strip (2).

## Patentansprüche

1. Rohraufhängevorrichtung mit mindestens einem Band (2) aus einem flexiblen Material um ein abzustützendes Rohr zu umwickeln, wobei das Band an seinen Enden Eingriffsorgane aufweist; und mit einem U-förmigen Stützelement, welches an gegenüberliegenden Seiten mit Verankerungsmitteln versehen ist, so dass jedes dieser Mittel mit den Eingriffsorganen an den Enden des Bandes lösbar kuppelbar ist, dadurch gekennzeichnet, dass die Eingriffsorgane am Band (2) einen freistehenden Zahn (15) in einer durchgehenden Öffnung (14) aufweisen und dass an einem Ende des Bandes (2) der Zahn (15) mit der Öffnung (14) eines anderen Bandes (2) in Eingriff bringbar ist, indem beide Bänder nebeneinander angeordnet und gegeneinander verschiebbar sind, bis die beiden Bänder miteinander verbindbar sind.

2. Vorrichtung nach Anspruch 1, dadurch gekennzeichnet, dass die Eingriffsorgane mindestens eine oder ein Paar durchgehende Öffnungen (14) je in der Nähe der Enden des Bandes (2) und einen wegragenden Zahn (15) in jeder Öffnung (14) aufweisen.

3. Vorrichtung nach Anspruch 2, dadurch gekennzeichnet, dass der oder jeder Zahn (15) an je einem Ende des Bandes (2) gegen den oder jeden Zahn am anderen Ende des Bandes gerichtet ist.

4. Vorrichtung nach einem oder mehreren der vorangehenden Ansprüche, dadurch gekennzeichnet, dass das U-förmige Stützelement (3) eine Klammer aufweist in der Form eines umgekehrten U und mit Armen versehen ist, wobei jeder dieser Arme je eine Öffnung (11, 11a) aufweist und mit einer Umschlagklappe oder Umschlagklappen (12) versehen ist, welche Umschlagklappen gegen das Innere des Stützelementes (3) gerichtet sind, um lösbar mit den Enden des Bandes (2) in Eingriff zu gelangen.

5. Vorrichtung nach einem der vorangehenden Ansprüche, dadurch gekennzeichnet, dass das U-förmige Stützelement ein Loch (5) aufweist zwecks Verbindung mit einem Verankerungselement.

6. Vorrichtung nach einem der vorangehenden Ansprüche, dadurch gekennzeichnet, dass das Eingriffsorgan ein Band (2a) aufweist, das aus einem flexiblen Material hergestellt ist und mit den Enden von einem oder mehreren Wickelbändern verbindbar ist und dazu geeignet ist, das U-förmige Stützelement (3) nach erfolgter Installation gegen das Rohr zu drücken.

7. Vorrichtung nach einem der vorangehenden Ansprüche, dadurch gekennzeichnet, dass eine lösbare Einlage (40, 42, 43) zwischen dem U-förmigen Stützelement (3) und dem Rohr (2) vorgesehen ist.

8. Vorrichtung nach Anspruch 7, dadurch gekennzeichnet, dass die Einlage einen Teil aufweist, der mit zwei seitlichen Abschnitten versehen ist, die in der Form einer geneigten Fläche (41, 46) ausgebildet sind, um eine Gleitverbindung zwischen den Endklappen (12) des U-förmigen Stützelementes (3) herzustellen.

9. Vorrichtung nach Anspruch 8, dadurch gekennzeichnet, dass die geneigten Flächen (41) mit Zähnen versehen, oder rauh ausgebildet sind.

10. Vorrichtung nach Anspruch 7, dadurch gekennzeichnet, dass die Einlage einen erhöhten Bereich oder einen Vorsprung (45, 47) aufweist, um mit einer Öffnung oder Schlitz (14, 30) im Band (2) in Eingriff zu kommen.

## Revendications

1. Collier de support pour conduites qui comprend :
au moins une bande (2) réalisée dans un matériau flexible pour s'enrouler autour d'une conduite à supporter, ladite bande étant munie de moyens d'engagement à ses extrémités ; et
un support (3) en forme de U qui est muni, sur les côtés opposés, de moyens d'ancrage dont chacun est approprié pour se coupler de façon détachable à une extrémité correspondante des moyens d'engagement dc la bande ;
le collier de support étant caractérisé en ce que lesdites extrémités des moyens d'engagement de la bande comprennent une dent en porte-à-faux à l'intérieur d'un passage traversant (14) proche de chaque extrémité de la bande, et à une extrémité de la bande (2), la dent (15) peut s'engager dans le passage (14) d'une autre bande (2), en plaçant de façon adjacente les deux bandes et en les faisant glisser l'une par rapport à l'autre, de sorte que les deux bandes peuvent être réunies.

2. Collier selon la revendication 1, caractérisé en ce que les moyens d'engagement comprennent au moins une ou une paire de passages traversant (14) à proximité de chaque extrémité de la bande (2), une dent (15) en porte-à-faux étant disposée dans chaque passage (14).

3. Collier selon la revendication 2, caractérisé en ce que la ou chaque dent (15) à une extrémité de la bande (2) est dirigée vers la ou chaque dent de l'autre extrémité de la bande.

4. Collier selon l'une ou plusieurs des revendications précédentes, caractérisé en ce que le support (3) en forme de U comprend unc bride qui est en forme de U inversé et qui comprend des bras (9, 10) dont chacun est muni d'au moins une ouverture d'extrémité (11, 11a) et d'une patte ou de pattes (12) d'extrémité qui sont dirigées vers l'intérieur du support pour s'engager de manière détachable avec les extrémités de la bande (2).

5. Collier selon une ou plusieurs des revendications précédentes, caractérisé en ce que le support en forme de U comprend un trou (S) pour le couplage avec des moyens d'ancrage.

6. Collier selon la revendication 1, caractérisé en ce que les moyens d'engagement comprennent une bande (2a) qui est réalisée dans un matériau flexible, qui peut être réunie aux extrémités d'une ou plusieurs bandes d'enroulement et qui est adaptée pour maintenir ledit support en forme de U poussé contre la conduite après installation.

7. Collier selon l'une quelconque des revendications précédentes, caractérisé en ce qu'il comprend un insert détachable (40, 42, 43) entre le support (3) en forme de U et la conduite (16).

8. Collier selon la revendication 7, caractérisé en ce que ledit insert comprend un corps (40, 43) qui cst muni dc deux parties latérales conformées comme un plan incliné (41, 46) pour un engagement par glissement avec les pattes d'extrémité (12) du support (3) en forme de U.

9. Collier selon la revendication 8, caractérisé en ce que les partics en plan incliné (41) sont munies de dents ou de rugosités.

10. Collier selon la revendication 7, caractérisé en ce que ledit insert (42) comprend une partie protubérante ou une protubérance (45, 47) pour un engagement avec un passage ou une encoche (14, 30) de la bande (2).
